# EUROPÄISCHE PATENTSCHRIFT

(11) **EP 2 278 160 B1**
(45) Veröffentlichungstag und Bekanntmachung des Hinweises auf die Patenterteilung: **25.04.2018**
(21) Anmeldenummer: 10180856.6
(22) Anmeldetag: 02.02.2004
(51) Int. Cl.: F03D 13/20

(54) **Windenergieanlage**
Wind turbine
Eolienne

(30) Priorität: 01.02.2003 DE 10304026; 06.03.2003 DE 10310036
(43) Veröffentlichungstag der Anmeldung: 26.01.2011
(62) Teilanmeldung aus: 04707228.5
(73) Patentinhaber: Wobben Properties GmbH, 26607 Aurich (DE)
(72) Erfinder: Wobben, Aloys, 26607 Aurich (DE)
(74) Vertreter: Eisenführ Speiser

(56) Entgegenhaltungen:
- WO-A1-01/06121
- WO-A2-01/46583
- DE-C1- 19 859 628
- DK-U3- 9 700 453
- DK-U3- 200 000 086
- "THE TW 2.0 OFFSHORE TECHNICAL DESCRIPTION", SUSTAIN. THE WORLD SUSTAINABLE ENERGY FAIR, XX, XX, 15 May 1999 (1999-05-15), pages 1-36, XP001059295,

## Beschreibung

Die Erfindung betrifft ein Verfahren zur Errichtung einer Windenergieanlage sowie die Windenergieanlage in ihrer Ausgestaltung selbst.

Bisher wird bei der Errichtung von Windenergieanlagen zunächst ein Fundament erstellt, dann der Turm der Windenergieanlage errichtet und anschließend das Maschinenhaus an der Turmspitze ausgerüstet und der Rotor mit den Rotorblättern angebracht. Hiernach werden die elektrischen Leistungsmodule wie der Transformator, Schaltschränke, gegebenenfalls Wechselrichter, Mittelspannungsanlage, usw. installiert. Dies geschieht fast immer in einem eigenen kleinen Gebäude außerhalb der Windenergieanlage.

In DE 198 16 483.1 ist bereits schon vorgeschlagen worden, den Transformator innen im Turm unterzubringen, so dass es in der Errichtung eines eigenen Trafogebäudes mit eigenem Fundament nicht mehr bedarf. Windenergieanlagen der eingangs genannten Art sind beispielsweise aus der WO 01/06121 A1, aus der DK 2000 00086 U3 und aus der DK 9 700 453 U3 bekannt geworden.

Aufgabe der Erfindung ist es nun, ein Verfahren zu entwickeln, mittels dem die Errichtung von Windenergieanlagen noch günstiger, vor allem aber auch schneller vorgenommen werden kann.

Ferner ist es das Ziel der Erfindung, insbesondere eine Lösung zur Verfügung zu stellen, die für Offshore-Windenergieanlagen geeignet ist.

Die Aufgabe wird mit einer Windenergieanlage mit den Merkmalen nach Anspruch 1 gelöst. Vorteilhafte Weiterbildungen sind in den Unteransprüchen beschrieben.
Gemäß der Erfindung wird zunächst vorgeschlagen, dass das Leistungsmodul in einem Behälter angeordnet ist, welcher Wandungen aufweist, die zwischen der Wandung des Turms und dem Leistungsmodul liegen. Mithin erfährt also das Leistungsmodul eine eigene Einhüllung bzw. wird in einem separaten Raum innerhalb des Turms der Windenergieanlage untergebracht. Der besondere Vorteil dieser Lösung besteht darin, dass damit in besonderer Weise bei Offshore-Windenergieanlagen gewährleistet werden kann, dass bei Eindringen von Wasser in den Turm nicht auch gleich das Leistungsmodul und die darin installierten elektrischen Einrichtungen in Mitleidenschaft gezogen werden.
Wenn der Transformator und die weiteren Teile des Leistungsmoduls wie Schaltanlagen, Wechselrichter usw. in einem separaten Raum innerhalb der Windenergieanlage untergebracht sind, ist es auch relativ einfach, diese Bauteile von der übrigen Raumluft innerhalb des Turms der Windenergieanlage zu trennen. Dies kann unter Umständen in einer Windenergieanlage dann sehr wichtig sein, wenn diese als Offshore-Windenergieanlage betrieben ist und daher ein gewisser Salzgehalt innerhalb der Luft nicht unwahrscheinlich ist. Durch die Einhausung der elektrisch empfindlichen Teile können diese grundsätzlich von der salzhaltigen Innenluft innerhalb des Turms der Windenergieanlage ferngehalten werden, indem beispielsweise die Einhausung und das Leistungsmodul auch mit einer begehbaren Schleuse ausgestattet ist. Sofern für die elektrischen Teile innerhalb der Einhausung eine Kühlung notwendig ist, so kann durch entsprechende Kühlkanäle, die in das Turminnere führen und beispielsweise auch an der Turmwandung entlang führen, Luft hier in die Kühlkanäle eingetragen (über Ventilator) werden und gelangt dann gekühlt wiederum in die Einhausung zurück, so dass innerhalb der Einhausung stets die gleiche Luft umgewälzt wird und diese nicht mit der u.U. salzhaltigen Luft im übrigen Turminneren angereichert wird.
Das Leistungsmodul in dem Behälter kann abweichend von der bisherigen Konstruktion von Windenergieanlagen, nach Errichtung des Fundaments der Windenergieanlage bereits vor Errichtung des Turms auf dem Fundament aufgesetzt werden oder der Behälter mit dem Leistungsmodul wird bereits werksseitig innerhalb des Turms angebracht und fixiert, so dass die Errichtung der Windenergieanlage auch möglich ist, ohne dass die gegenüber Feuchtigkeit und Nässe empfindlichen elektrischen Teile der Offshore-Windenergieanlagen bei Errichtung dieser Anlagen in Mitleidenschaft gezogen werden.

Die Leistungsmodule sind soweit wie möglich bereits vorgefertigt und auf Trägern montiert, so dass durch einen Kran, den man ohnehin zur Errichtung einer Windenergieanlage benötigt, die Leistungsmodule auf dem Turmfundament oder einer Plattform aufgestellt werden können und die gesamte Betriebsfertigung, insbesondere das Verlegen von Kabeln sowie die gesamte Betriebsvorbereitung der Windenergieanlage durch Einstellung einzelner Steuerungsmodule, Einrüstung der Schaltschränke etc. in einem geschützten Raum stattfinden kann und mit diesen Tätigkeiten begonnen werden kann, nachdem der Turm errichtet wurde.

Besonders vorteilhaft ist es auch, wenn die Träger der Leistungsmodule und/oder der Behälter für das Leistungsmodul an ihrer Unterseite Stützfüße aufweisen, die wiederum auf vorpositionierten Platten auf dem Turmfundament ruhen. Diese Platten werden bereits bei der Erstellung des Fundaments an bestimmten Positionen eingelassen und in dem Fundament fixiert, so dass eine spätere Aufstellung der Leitungsmodule auf sehr einfache Weise vorgenommen werden kann.

Schließlich ist es auch sehr vorteilhaft, wenn für die Kabel, die aus der Windenergieanlage herausführen, also insbesondere die Stromübertragungskabel, Steuerungskabel etc. Leerrohre vorgesehen sind. Für diese Leerrohre sind im Fundament einer Windenergieanlage bzw. oberhalb des Fundaments Leerrohrtraversen vorgesehen und diese Leerrohrtraversen fixieren die Leerrohre in einer definierten Lage. Hierzu werden die Traversen mittels Haltearmen, die ihrerseits wiederum in Teilen des Fundaments oder an der unteren Sektion der Kabelzuführung exakt vorbestimmt werden und vor allem auch so gelegt werden, dass die Kabel, die aus dem Leistungsmodul in das Fundament reichen, über einen normierten kürzesten und optimalen Kabelweg verfügen.

Die erfindungsgemäßen Maßnahmen erleichtern also auch die gesamte elektrische Einrichtung der Windenergieanlage durch eine Vorfertigung von einzelnen Modulen bzw. Normierung wie Leerrohrtraversen, Leistungsmodulträger etc. bereits bei der Fundamenterrichtung.

Mit den erfindungsgemäßen Maßnahmen lässt sich die gesamte Errichtungszeit der Windenergieanlage deutlich verkürzen. Auch lassen sich mit der Erfindung die Kosten für die gesamte Errichtung der Windenergieanlage verringern, ohne dass irgendwelche technischen Nachteile in Kauf genommen werden müssen.

Die Erfindung wird nachfolgend anhand eines in einer Zeichnung ausgeführten Beispiels näher erläutert.

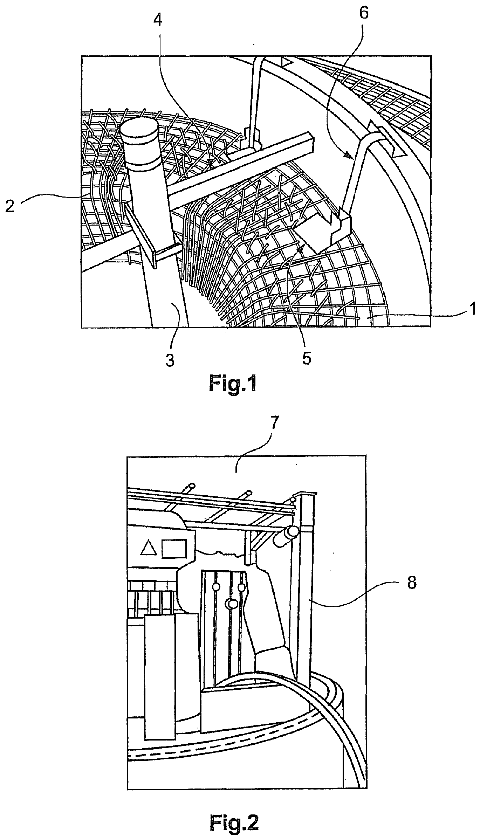

Fig. 1 zeigt eine Aufsicht auf ein voreingerichtetes Fundament (ohne Betonfüllung) mit einer Stahlarmierung 1 und 2, an einem Leerrohr 3, welches über eine Verstrebung mit einer an die Armierung angrenzende unterste Turmsektion gehalten wird. Ferner sind Tragplatten 5 zu erkennen, die für Haltearme in der untersten Turmsektion (die später nach der Errichtung der Windenergieanlage größtenteils nicht mehr zu sehen sind) angebracht sind.

Das Leerrohr 3 dient später zur Aufnahme von Kabeln, beispielsweise der Stromkabel, über die die gesamte elektrische Energie der Windenergieanlage zum Netz über Erdkabel abgeführt wird. Hierzu ist oftmals nicht nur ein einziges Rohr, sondern mehrere Rohre vorgesehen.

Fig. 2 zeigt die Fundamentsektion nach Einfüllung des Betons. Hierbei ist zu sehen, dass die Leerrohre in ihrer vorfixierten Position verbleiben und auch die Tragplatten mit einbetoniert sind, wobei beim Betonieren darauf zu achten ist, dass die Tragplatten satt auf dem Konstruktionsbeton aufliegen und so einen flächigen Lastabtrag gewährleisten. Der Beton reicht bis zur Oberkante der Tragplatten und ist sorgfältig an den Plattenrand angearbeitet.

Nach Aushärtung des Betons können die Haltearme zum Halten der Tragplatten wie auch die Traversen zur Fixierung der Leerrohre abmontiert und für die Errichtung weiterer Anlagen wiederverwendet werden.

Nach dem Aushärten des Betons wird zur weiteren Errichtung der Windenergieanlage nicht - wie bis dahin üblich - der Turm auf die Fundamentsektion aufgesetzt, sondern es wird zunächst das erfindungsgemäße Leistungsmodul auf die Tragplatten gestellt.

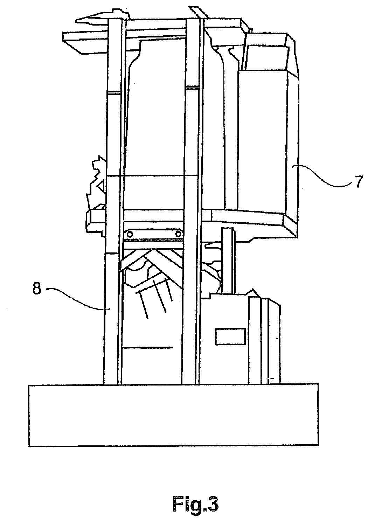

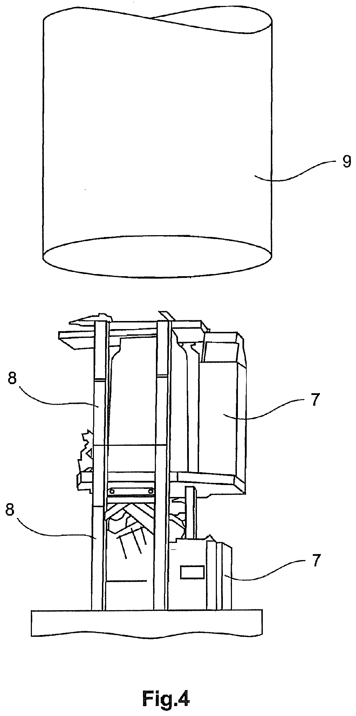

Ein solches Leistungsmodul 7 ist in Fig. 3 in einer zweiteiligen Ausführung noch ohne Einhausung gezeigt, wobei das Leistungsmodul auch aus weiteren Teilen bestehen kann.

Die beiden Teile des Leistungsmoduls 7 sind im dargestellten Beispiel übereinander gestellt und das gesamte Leistungsmodul besteht aus zwei übereinandergestellten Trägern 8, die ihrerseits wiederum wesentliche Teile der Leistungsmodule aufnehmen, also beispielsweise den Transformator, Wechselrichter, Schaltschränke, Mittelspannungsanlage etc.

Die übereinandergestellten Träger sind nach Art eines Rahmens aufgebaut und passen exakt übereinander, so dass auch eine zuverlässige Befestigung gegeneinander gewährleistet ist.

Die einzelnen Träger weisen unter anderem vier - ein Rechteck aufspannende - vertikal ausgerichtete Holme auf, die untereinander verbunden sind. Diese Holme sind an ihrer Unter- und Oberseite miteinander verschraubt.

Nach der Aufstellung des elektrischen Leistungsmoduls auf dem Fundament wird der Turm errichtet und hierbei über das Leistungsmodul gestülpt. Dazu sind die äußeren Abmaße des Leistungsmoduls hinsichtlich Breite und Länge geringer als der Innendurchmesser des Turms im unteren Turmbereich/Fundamentbereich.

Nach Errichtung des Turms wird die Windenergieanlage wie üblich mit dem Maschinenhaus ausgestattet, der Rotor wird montiert und für die Inbetriebnahme werden entsprechende elektrische Verbindungen zwischen dem Generator und dem Leistungsmodul hergestellt und es erfolgt der Anschluss des Leistungsmoduls (Ausgang des Transformators) an das Stromversorgungsnetz.

Wenn die vorbeschriebenen Leerrohre bzw. für die Kabeldurchführung vorgesehenen Einrichtungen in bestimmter vorbeschriebener Position vorfixiert sind, kann auch die Verbindung zwischen dem Leistungsmodul und dem Netz äußerst schnell und günstig hergestellt werden, wobei die Kabellängen insgesamt optimiert sind, weil die Leerrohre dort positioniert sind und damit die Kabel dort aus dem Fundament austreten, wo sie bei einer normierten, optimierten Bauweise zur Verbindung mit den entsprechenden Teilen des Leistungsmoduls benötigt werden.

Bei der erfindungsgemäßen Windenergieanlage ist es vorteilhaft, wenn der Zugang der Windenergieanlage nicht mehr unbedingt im festen Fundamentbereich durch eine übliche Tür erfolgt, sondern durch eine Tür (Zugang), die so positioniert ist, dass sie in den Bereich oberhalb der Hoch- oder Mittelspannung führenden Teile des Leistungsmoduls mündet. Hierzu kann an der Außenseite des Turms eine entsprechende Leiter oder Treppe vorgesehen sein. Diese Positionierung der Zugangstür hat den Vorteil, dass das Personal, welches die Anlage häufiger betreten muss, sich nicht stets an den Spannungen führenden Teilen des Leistungsmoduls vorbei bewegen muss, während die Anlage in Betrieb ist. Damit wird auch sichergestellt, dass nicht unvorhergesehenerweise oder aus Versehen während des Betriebs der Windenergieanlage jemand sich in unmittelbarer Nähe des Leistungsmoduls befindet und hierbei in Berührung mit spannungs- oder stromführenden Teilen kommt, was einen großen Unfall verursachen könnte.

Im Bereich der Zugangstür des Turms ist dann eine entsprechende Zwischenplattform vorgesehen, die das Personal, welches den Turm betritt, begehen kann, um dann im Inneren des Turms weiter in der Windenergieanlage hoch zu steigen oder an verschiedenen Steuereinrichtungen Einstellungen vorzunehmen oder auch Messdaten abzulesen.

Bei einer Windenergieanlage des erfindungsgemäßen Typs handelt es sich um eine solche, die regelmäßig über mehr als 100 kW Nennleistung verfügt, vorzugsweise eine Nennleistung im Bereich von 500 kW, 1 MW, 1,5 MW oder deutlich mehr aufweist. Bevorzugt ist die Zwischenplattform mit einer schließbaren Platte versehen, durch die das Personal in den unteren Bereich des Leistungsmoduls einsteigen kann. Mit dem Verschluss der Klappe ist eine weitere Sicherung des unteren Teils des Leistungsmoduls gegen unbefugten Zugriff bzw. Zutritt gewährleistet.

Der innere Durchmesser des Turms im Fundamentbereich kann dabei mehrere Meter betragen, so dass die gesamte Fläche dort z. B. 100 m² oder mehr beträgt und daher eine ausreichend große Fläche zur Aufnahme der Leistungsmodule zur Verfügung steht. Soweit in dieser Anmeldung der Begriff "Leistungsmodul" verwendet wird, so ist damit insbesondere der Umrichter- und Netzübergabe-Bereich der Windenergieanlage gemeint. Dies sind insbesondere die Aggregate wie Transformator oder Wechselrichter oder Notschalter sowie der Mittelspannungsschaltschrank oder auch die Verteiler.

Wie erwähnt, soll das Leistungsmodul in einem eigenen Behälter bzw. Raum innerhalb der Windenergieanlage untergebracht werden. Dieser Behälter kann aus einem zylindrischen Rohr bestehen, welcher nach Aufsetzen des Leistungsmoduls auf dem Fundament über das gesamte Leistungsmodul gestülpt wird oder das Leistungsmodul wird bereits werksseitig innerhalb des zylindrischen Rohrs untergebracht, so dass zum Transport des zylindrischen Rohrs das gesamte Leistungsmodul transportiert wird. Der Behälter kann insbesondere auch nach allen Seiten hin weitestgehend geschlossen sein, wird jedoch mit wenigstens einer Zugangstür versehen und wenn das Leistungsmodul auf mehreren Ebenen innerhalb des Rohres ausgebildet ist, so ist es auch möglich, die verschiedenen Ebenen das Leistungsmodul über Treppen bzw. Leitern innerhalb des Moduls zu erreichen.

Innerhalb des Behälters kann ein zusätzlicher Raum vorgesehen sein, der z.B. als Umkleideraum und/oder Aufenthaltsraum für Menschen wie Servicetechniker usw. zur Verfügung steht. Dies ist insbesondere dann sehr sinnvoll, wenn die Erfindung bei Offshore-Windenergieanlagen realisiert wird und in einem Schlechtwetterfall die Techniker gezwungen sind, eine gewisse Zeit innerhalb der Windenergieanlage zu verbleiben. Dieser Raum sollte daher auch mit den notwendigsten Utensilien versorgt sein, die einen längeren Aufenthalt ermöglichen wie z.B. Frischwasser, Nahrung, Schlafmöglichkeiten, Kommunikationsgeräte.

Weiterhin kann dieser Raum eine Schleusenfunktion übernehmen und gegen das Innere der Windenergieanlage hermetisch abschließbar sein. Somit können sich Personen z.B. im Falle eines Feuers in der Windenergieanlage dorthin retten und ihrer Bergung veranlassen und warten.

Soweit die Einhausung aus einem zylindrischen Rohr besteht, können die oberen und unteren Rohrenden bzw. weitere eventuell vorhandene Zusatzöffnungen für den Transport zum Aufbau verschlossen werden oder die oberen und unteren Rohrenden sind von vornherein fest verschlossen, so dass auch bei schwerem Wetter ein Transport zur Baustelle bzw. eine Unterbrechung der Bautätigkeit nicht mit der Gefahr einhergeht, dass Seewasser oder Feuchtigkeit in den Behälter und damit an die elektrisch empfindlichen Teile des Leistungsmoduls geraten kann.

Soweit eine Kühlung der Leistungsmodulelemente notwendig ist, ist auch der Behälter so ausgestattet, dass ein Luftaustausch zwischen dem Inneren des Leistungsmoduls und dem Turminneren der Windenergieanlage möglich ist. Bevorzugt kann auch nur eine Wärmeabgabe der Abwärme des Leistungsmoduls an das Turminnere jedoch außerhalb des Leistungsmoduls erfolgen. Dazu kann ein geschlossener Luftkreislauf für das Leistungsmodul vorgesehen sein, der die Wärme über einen geeigneten Wärmetauscher, z.B. in Form einer Kühlschlange, an das Turminnere abgibt.

Soweit eine Kühlung der einzelnen Elemente des Leistungsmoduls notwendig ist, so kann dies auch dadurch geschehen, indem Luft aus dem Inneren der Einhausung über

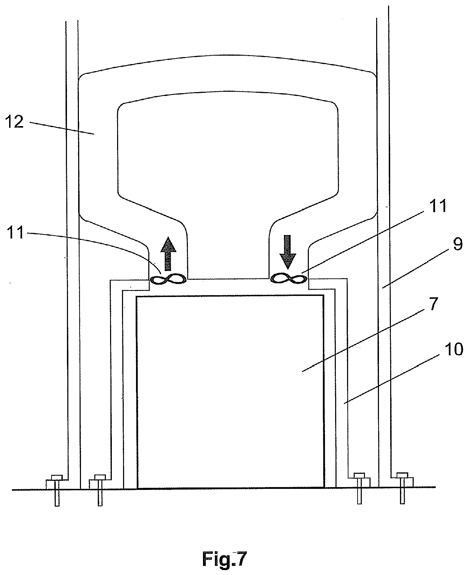

Luftkanäle 12 - Fig. 7 - (Luftschächte), die einerseits in die Einhausung münden, geführt wird und diese Luftschächte an einer anderen Stelle wiederum in die gekühlte Luft in die Einhausung zurückführen. Durch Ventilatoren am Eingang und/oder Ausgang der einzelnen Luftschächte ist eine Zwangskonvektion der Luft innerhalb der Einhausung einzustellen. Wenn diese Luftkanäle (Luftschächte) direkt am Turm der Windenergieanlage in Kontakt zu diesem geführt werden, beispielsweise auch in mehreren Lagen übereinander spiralförmig, so wird die Luft innerhalb der Luftkanäle gekühlt, weil die Turmwandung selbst ein Kühlelement bildet, welches von außen stets von Luft oder Wasser umströmt wird. Die vorgenannte Variante hat den besonderen Vorteil, dass das Innere der Einhausung dann stets vom Inneren des Turms getrennt ist und wenn die Windenergieanlage eine Offshore-Windenergieanlage ist, so ist das Innere der Einhausung sehr sicher davor geschützt, mit eventuell salzhaltiger Luft, die in das Turminnere eingedrungen ist, in Berührung zu kommen. Damit werden sämtliche elektrischen Teile des Leistungsmoduls im Inneren der Einhausung gegen den Kontakt von sehr aggressiver Luft, wie salzhaltiger Luft geschützt, ohne dass unbedingt Maßnahmen notwendig sind, gleich das gesamte Turminnere gegen das Eindringen von salzhaltiger Luft zu schützen.

Es bietet sich bei einer geschlossenen Einhausung für den Transformator und die anderen elektronischen Elemente an, innerhalb der Einhausung auch eine Brandschutzeinrichtung unterzubringen, welche aktiviert wird, wenn dort ein Brand ausbricht. Diese Brandschutzeinrichtung kann beispielsweise auch darin bestehen, dass die gesamte Einrichtung mit einem Inertgas geflutet wird, z.B. CO₂, so dass der Sauerstoffgehalt innerhalb der Einhausung verringert wird und somit einem eventuellen Brand der notwendige Sauerstoff entzogen wird. Statt einem Gas wie CO₂ kann aber auch ein Gas wie Stickstoff oder ein anderes Inertgas eingetragen werden. Dieses Inertgas wird im Tank aufbewahrt und wird über einen oder mehrere Sensoren, die bei einem Brandfall (oder bei stark erhöhter Temperatur) ansprechen, über ein Ventil, welches den Tank mit dem Inertgas verschließt, geöffnet, so dass das Inertgas sehr schnell in die Einhausung einströmen kann.

Unter Umständen sind Sicherheitsvorrichtungen ausgebildet, mittels denen verhindert wird, dass das Inertgas dann in die Einhausung einströmen kann, wenn sich dort Menschen befinden. Eine solche Sicherheitsvorrichtung kann beispielsweise auch Schaltelemente enthalten, die seitens des Bedienungspersonals bei Begehung der Einhausung aktiviert werden, so dass dann das Einströmen der Inertgase in die Einhausung verhindert ist.

Für den Fall, dass dennoch einmal salzhaltige Luft in die Einhausung gelangen sollte, ist es auch vorteilhaft, wenn innerhalb der Einhausung Mittel vorhanden sind, um die dort vorhandene Luft zu entsalzen.

Damit möglichst wenig salzhaltige Luft in die Einhausung gelangen kann, ist es auch vorteilhaft, wenn die Einhausung mit einer Schleuse versehen ist, welche bevorzugt aus einem glasfaserverstärkten Kunststoff (GFK) hergestellt ist. Wenn das Bedienungspersonal über die Schleuse in die Einhausung eintreten möchte, wird Luft in die Schleuse gedrückt, so dass das Bedienungspersonal gegen einen Luftstrom in die Einhausung gehen kann. Daher ist es vorteilhaft, wenn die Einhausung auch mit einem weiteren Tank verbunden ist, innerhalb dem weitgehend salzfreie Luft gespeichert wird und welche dann in die Einhausung gedrückt wird, wenn Bedienungspersonal über die Schleuse in die Einhausung gehen möchte.

Es ist ferner auch vorteilhaft, wenn innerhalb der Einhausung Mittel vorhanden sind, die so ausgebildet sind, die Feuchtigkeit innerhalb der Einhausung zu minimieren. Ein solches Mittel kann beispielsweise ein Peltier-Element sein.

Die Mittel zur Entsalzung der Luft wie auch zur Verringerung der Feuchtigkeit werden gegebenenfalls dann aktiviert, falls entsprechende Sensoren, die auf den Salzgehalt in der Luft oder die Feuchtigkeit ansprechen, das Überschreiten eines bestimmten Salzwertes bzw. Feuchtigkeitswerte feststellen. Die Mittel zur Entsalzung der Luft wie auch zur Verringerung der Feuchtigkeit werden dann so lange aktiviert, bis der Salzgehalt und/oder Feuchtigkeitsgehalt unter wenigstens einen vorbestimmten Wert gefallen ist.

Die Einhausung mit dem darin eingeschlossenen Leistungsmodul kann auf dem Fundament der Windenergieanlage aufgestellt werden oder auf einer Plattform innerhalb des Turms der Windenergieanlage. Diese Plattform kann bevorzugt auch sehr weit oben gerade unterhalb des Maschinenhauses der Windenergieanlage angebracht werden, um somit die bestmögliche Art und Weise zu gewährleisten, dass so wenig Salz wie möglich bei einer Windenergieanlage, die als Offshore-Anlage aufgestellt ist, in die Einhausung gelangen kann.

Vorteilhaft ist ferner auch, wenn die Daten, die die Sensoren für den Salzgehalt und/oder die Feuchtigkeit messen, an eine Zentrale weitergeleitet werden, in der die gesamte Windenergieanlage gesteuert bzw. überwacht wird. Über die Zentrale können die Mittel zur Verringerung des Salzgehaltes bzw. zur Verringerung der Feuchtigkeit innerhalb der Einhausung aktiviert werden.

Zur Vermeidung des Ausbruchs eines Brandes bei Teilen des Leistungsmoduls ist es auch möglich, dass während des Normalbetriebs innerhalb der gesamten Einhausung eine sauerstoffarme Atmosphäre herrscht. Dies kann beispielsweise dadurch geschehen, dass der Luft innerhalb der Einhausung Sauerstoff entzogen wird, so dass der Sauerstoffgehalt unter dem normalen Sauerstoffgehalt von Luft sinkt. Natürlich ist es auch möglich, dass in der gesamten Einhausung ein hoher CO₂-Gehalt (bis zu 100%) oder Stickstoffgehalt (bis zu 100%) oder eines anderen Inertgases (aus einem Tank) verwirklicht ist. Erst dann, wenn das Bedienungspersonal die Einhausung betreten will, wird dann innerhalb der Einhausung wieder eine normale Atmosphäre hergestellt, so dass der Aufenthalt in der Einhausung möglich ist. In einem solchen Fall ist es sinnvoll, wenn die Schleuse erst dann zu öffnen ist, wenn innerhalb der Einhausung eine Atmosphäre hergestellt ist, die den Aufenthalt innerhalb der Einhausung ohne Atemgeräte ermöglicht.

Die erfindungsgemäße Einhausung kann nicht nur innerhalb der Windenergieanlage untergebracht werden, sondern auch direkt außenseitig am Turm angebracht werden. Dies kann beispielsweise dadurch geschehen, indem die gesamte Einhausung auf einer Plattform außenseitig am Turm angebracht wird oder direkt am Turm befestigt wird. Ist die Einhausung als geschlossenes Rohr ausgeführt und ist dieses Rohr außenseitig am Turm angeordnet, so kann die Begehung der Einhausung über eine Tür bzw. Schleuse zur Einhausung und dem Inneren des Turms erfolgen. Auch bei dieser Variante ist es ohne weiteres möglich, dass das Innere der Einhausung über Luftkanäle, die in den Turm hereinragen oder diesen umgeben, gekühlt wird, ohne dass die Außenluft, die die Windenergieanlage umgibt, in Berührung kommt mit der Luft innerhalb der Einhausung.

Es ist ferner vorteilhaft, wenn die Einhausung mehrteilig ausgebildet ist, so dass beispielsweise bei Austausch eines einzelnen Teils des Leistungsmoduls nicht die gesamte Einhausung entfernt werden muss, sondern nur das Modulteil der Einhausung, welches direkt das auszuwechselnde Teil des Leistungsmoduls umgibt.

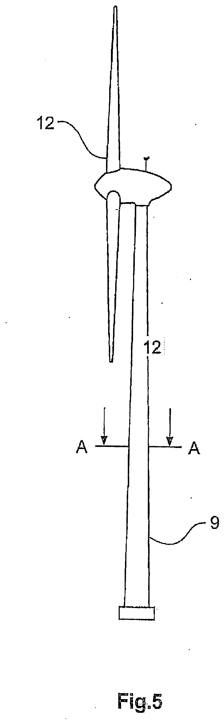

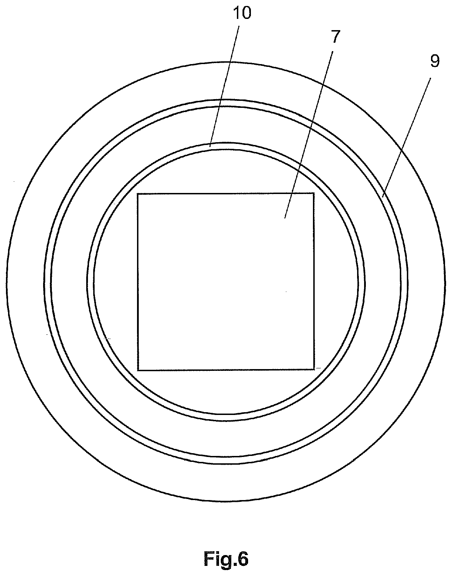

Fig. 5 zeigt eine Seitenansicht einer erfindungsgemäßen Windenergieanlage 12 mit einem Turm 9. Fig. 6 zeigt einen Schnitt entlang der Linie A-A in Fig. 5. Hierbei ist in Fig. 6 zu sehen, dass zwischen dem Leistungsmodul 7 und der Turmwandung eine Einhausung 10 liegt, wobei diese Einhausung 10 ebenfalls ein Rohr sein kann.

Fig. 7 zeigt einen Längsschnitt durch den Turmbereich. Hierbei ist zu sehen, dass wiederum die Einhausung 10 das Leistungsmodul 7 von der Turmwandung 9 vollständig abschirmt. Für die Kühlung des Leistungsmoduls wird die Luft innerhalb der Einhausung über einen Ventilator 11 in einen Luftkühlkanal 12 geströmt und dieser Luftkanal 12 ist zum Teil direkt an die Turmwandung 9 gelagert, so dass insbesondere dort die erwärmte Luft abgekühlt werden kann und dann wiederum in die Einhausung 10 zurückströmen kann. Es liegt auf der Hand, dass die Luftkühlkanäle jedwede Form annehmen können, insbesondere auch spiralförmig an der Turmwandung 9 entlang geführt werden können, um somit eine optimale Kühlung der Luft innerhalb des Luftkanals 12 zu erreichen.

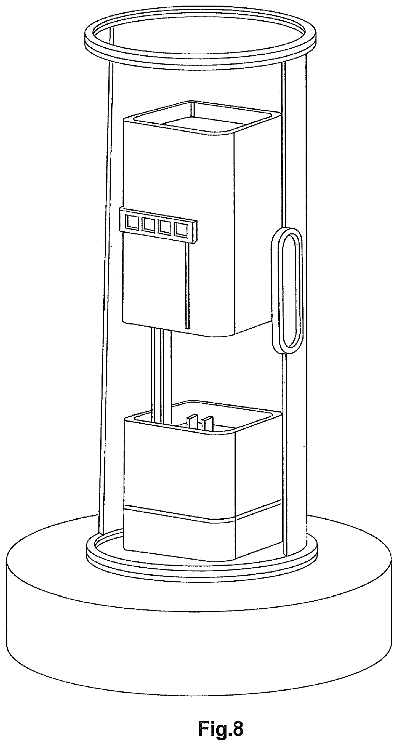

Fig. 8 zeigt eine Ausrissdarstellung einer erfindungsgemäßen Windenergieanlage, bei welcher zu erkennen ist, dass verschiedene Teile der Windenergieanlage innerhalb einer Einhausung auf verschiedenen Ebenen liegen.

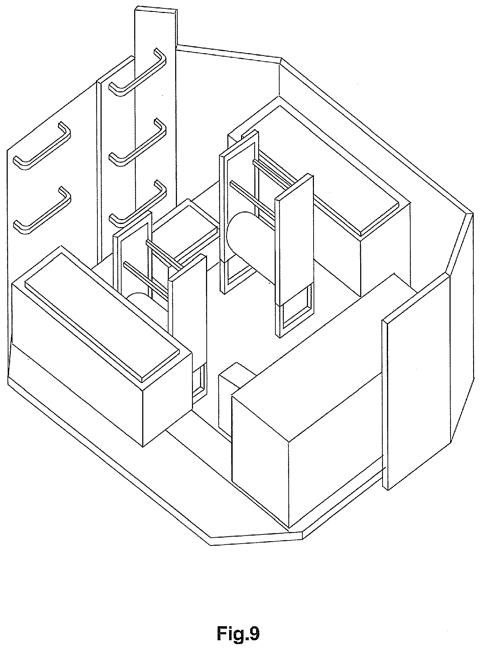

Fig. 9 zeigt einen Teilausriss in der Aufsicht auf eine der in Fig. 8 dargestellten Ebenen. Fig. 9 zeigt eine Aufsicht (im Ausriss) auf die Eingangsebene (dritte Ebene), in der ein Steuerschrank, Steuerpult, DUV-Pult usw. untergebracht sind. Die dort verlegten Bodenplatten sind demontierbar, um Teile, die unterhalb dieser Ebene liegen, in die dritte Ebene und damit auch in die Eingangs- und Ausgangsebene zu befördern. Dies ist unter Umständen dann wichtig, wenn beispielsweise ein Teil aus der ersten und zweiten Ebene mittels eines Krans in die dritte Ebene hochbewegt werden muss, um dann über den Eingang der Windenergieanlage nach draußen befördert zu werden.

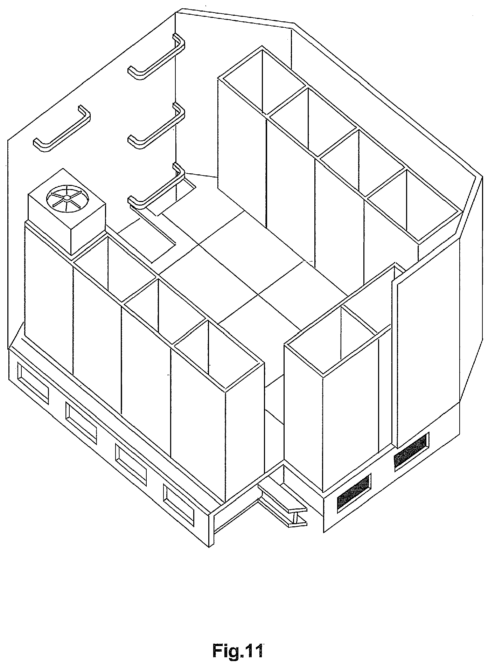

Fig. 11 zeigt einen Teilausriss auf eine Leistungsschrankebene. Solche Leistungsschrankebenen können auch in mehreren Ebenen, z. B. in der 4., 5., 6. und 7. Ebene ausgebildet werden, weil bei größeren Anlagen regelmäßig mehrere Leistungsschränke benötigt werden und unter Umständen nicht alle in einer Ebene untergebracht sein können. Hierbei ist auch zu erkennen, dass in jeder Ebene Wanddurchbrüche für Abluft vorgesehen sind, damit Abluft durch Sammelkanäle herausgeleitet und in den Turm der Windenergieanlage geleitet werden kann, wo dann durch einen Wärmeaustausch mit der Turmwandung die Luft abgekühlt wird.

Wenn die Einhausung geschlossen ist, ist es auch möglich, dass der Luftdruck innerhalb der Einhausung unterschiedlich vom Luftdruck außerhalb der Einhausung ist, insbesondere auch der Luftdruck außerhalb der Einhausung aber innerhalb des Turms.

Es kann schließlich auch vorgesehen sein, dass innerhalb der Einhausung und/oder in einem der Luftkanäle eine Wärme- und/oder Kühleinrichtung ausgebildet ist, so dass die Temperatur innerhalb der Einhausung beeinflussbar ist. Eine Wärmeeinrichtung ist unter Umständen dann sinnvoll, wenn die Anlage - aus welchen Gründen auch immer - für einen längeren Zeitraum stillgestanden hat und im Winter auf Temperaturen abkühlt, die unerwünscht sind. Andererseits kann mit einer Kühleinrichtung (z. B. Wärmetauscher) die Kühlung der Luft innerhalb der Einhausung sehr effektiv und schnell erfolgen.

Schließlich ist es vorteilhaft, wenn die gesamte Einhausung als selbsttragende Einrichtung ausgebildet ist, so dass mit den in der Einhausung untergebrachten Einrichtungen die gesamte Einhausung transportierbar und insbesondere an einem Kran verfahrbar ist. Insbesondere wenn die Einhausung ein Rohr (z. B. aus Stahl) ist, ist eine solche Lösung ohne weiteres möglich. Der Vorteil dieser Lösung besteht insbesondere darin, dass dann die gesamte Einhausung nebst aller darin befindlicher Teile werksseitig und somit in höchster Qualität gefertigt werden kann und nur noch zum Aufstellort transportiert werden muss.

Auch kann durch die vorgegebene Lösung eine eventuelle spätere Demontage erheblich erleichtert werden.

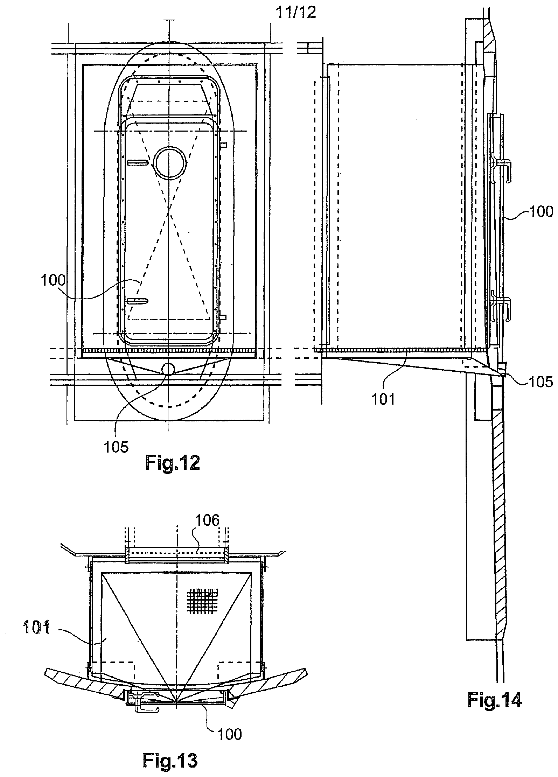

Die. Fig. 12 bis 16 zeigen weitere Details einer erfindungsgemäßen Windenergieanlage mit dem bereits beschriebenen Leistungsmodul. Dabei wird insbesondere beschrieben, wie zwischen dem äußeren Eingang zum Turm der Windenergieanlage und dem Inneren der Anlage, also dort, wo die elektronischen und elektrischen wichtigen Teile des Leistungsmoduls liegen, eine Schleuse ausgebildet ist, welche verhindert, dass für den Fall, dass die gesamte Windenergieanlage als Offshore-Windenergieanlage eingesetzt wird, salzhaltige Luft bzw. Salzwasser in das Innere der Anlage gelangen kann und somit elektrische oder elektronische Teile beschädigen oder zerstören kann.

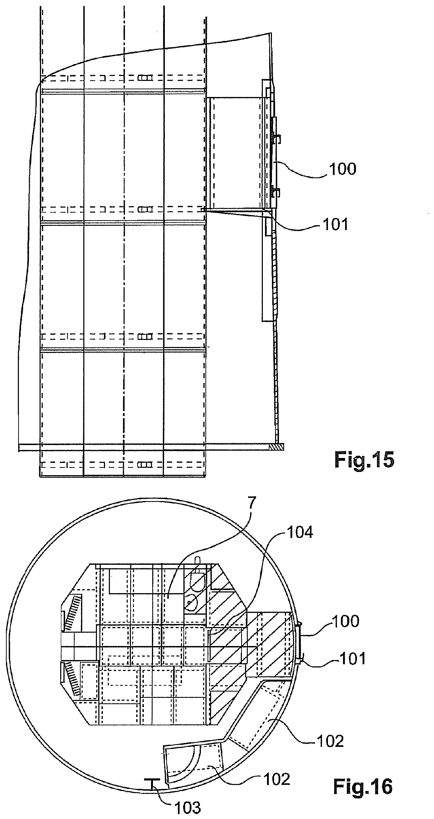

Fig. 15 zeigt in einem Teillängsschnitt des unteren Turms verschiedene Ebenen, auf die sich unter Umständen das Leistungsmodul unterteilt und in der Fig. 15, rechts oben den äußeren Eingang zum Turminneren. Dieser Eingang ist regelmäßig ein Tor bzw. eine Tür, die jeweils verschließbar ist. Wie bereits in der Fig. 15 zu erkennen, geht von dieser Tür 100 nach innen im Wesentlichen senkrecht zur Turmwandung eine Plattform 101 ab, welche bevorzugt direkt mit dem Turm verbunden ist, so dass diese Plattform bereits dann begehbar ist, wenn der Turm aufgestellt ist.

Fig. 16 zeigt die in Fig. 15 dargestellte Ausführung mit Blick von oben, wobei das Rohrmodul 7 zu sehen ist wie auch das Tor 100 und die Plattform 101. Seitlich zu der Plattform gibt es weitere Plattformen, bevorzugt Gitterroste, die auch fest an der Turmwandung angebracht sind und die es ermöglichen, dass eine Person schon in einem sehr frühzeitigen Stadium nach dem Aufbau der Windenergieanlage durch das Tor über die vorbeschriebenen Plattformen 101, 102 zu der in dem Turm vorgesehenen Leiter 103 gehen kann.

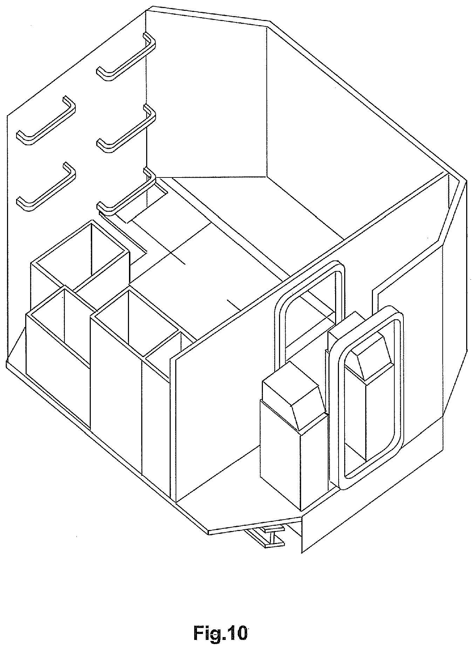

Wie auch in der Aufsicht, wie aber auch in Fig. 15 zu sehen, schließt sich direkt an die Plattform 101 zum Turminneren hin ein Raum an (s. auch hierzu Fig. 10, rechter unterer Teil der Figur), welcher gegebenenfalls zusammen mit dem Raum, der sich oberhalb der Plattform 101 ausbildet, eine geschlossene Schleuse bildet. Die Fläche dieses Schleusenraumes ist in Fig. 16 gestrichelt dargestellt.

In diesen Raum tritt Bedienungspersonal von außen her ein und kann sich in diesem Raum möglicherweise umziehen, zumindest kurzfristig aufhalten. Auch sind in diesem Raum sanitäre Einrichtungen eingerichtet. In diesem Schleusenraum gibt es eine weitere Tür 104, die zum Inneren des Turms, also zu den Einrichtungen des Leistungsmoduls gelangen kann.

Diese Tür 104 ist bevorzugt feuchtigkeitsdicht, so dass dann, wenn u.U. Feuchtigkeit in den Schleusenraum gelangt, nicht durch die Tür 104 in das Innere der Anlage gelangen kann.

Fig. 12 zeigt eine Aufsicht von außen auf die Eingangstür 100 der Windenergieanlage.

Fig. 13 zeigt nochmals einen vergrößerten Ausschnitt in den Schleuseneingangsraum aus Fig. 16.

Fig. 14 zeigt eine weitere Detailansicht aus Fig. 15. Dort ist gut zu erkennen, dass der Boden des Schleuseneingangsraums am Turminneren selbst befestigt ist und dieser Boden ist bevorzugt feuchtigkeitsdurchlässig, so dass dann, wenn beim Öffnen der Eingangstür 100 Spritzwasser o.dgl. in den Schleuseneingangsraum gelangt, durch den Boden abfließen kann. Unterhalb des Bodens, welcher bevorzugt auch als Gitterrost ausgebildet ist, ist eine nach außen zur Turmwandung hin geneigte, wasserundurchlässige Platte ausgebildet. Wenn also Spritzwasser oder auch Feuchtigkeit von der Kleidung des Bedienpersonals in diesen Raum durch das Gitterrost abtropft, so kann dieses Wasser direkt wieder nach außen durch eine Öffnung 105 abfließen.

Wie auch in Fig. 16 aber auch in den Fig. 14 und 13 zu erkennen, kann der Schleuseneingangsraum 101 durch eine weitere Tür 106 verschließbar sein. Diese Tür, welche auch bevorzugt feuchtigkeits- und wasserdicht ist, trennt den Schleuseneingangsraum zum Schleusenzentralraum mit den bereits beschriebenen sanitären Einrichtungen.

## Patentansprüche

1. Windenergieanlage mit einem Turm (9), welcher auf einem Fundament gründet, und einem Leistungsmodul (7), wobei das Leistungsmodul (7) wenigstens einen Transformator und/oder Wechselrichter aufweist, mittels dem die elektrische Energie, die vom Generator der Windenergieanlage zur Verfügung gestellt wird, auf eine mittlere Spannung oder Hochspannung transformiert wird, wobei das Leistungsmodul (7) darüber hinaus weitere Einheiten enthält, mittels denen die elektrische Energie, die vom Generator der Windenergieanlage bereitgestellt wird, gesteuert und/oder geleitet und/oder umgewandelt wird, wobei das Leistungsmodul (7) einen Träger (8) aufweist, der auf dem Fundament der Windenergieanlage aufgesetzt ist,
**dadurch gekennzeichnet, dass** das Leistungsmodul (7) in einem das Leistungsmodul einhausenden Behälter innerhalb des Turms angeordnet ist, wobei der Behälter eine Wandung (10) aufweist, die zwischen der Wandung des Turms (9) und dem Leistungsmodul (7) liegt.

2. Windenergieanlage nach Anspruch 1,
**dadurch gekennzeichnet, dass** die Windenergieanlage mit einer begehbaren Schleuse ausgestattet ist.

3. Windenergieanlage nach einem der vorhergehenden Ansprüche,
**dadurch gekennzeichnet, dass** der Behälter eine Einhausung für die elektrischen empfindlichen Teile der Windenergieanlage, wie z.B. Schaltanlagen, Wechselrichter, Transformator usw. bildet und dass zur Kühlung der elektrischen Teile innerhalb der Einhausung eine Kühlung vorgesehen ist, die durch entsprechende Kühlkanäle (12) gebildet wird, die in das Turminnere führen und beispielsweise auch an der Turmwandung entlang führen, wobei Luft in die Kühlkanäle (12) über einen Ventilator (11) eingetragen wird und die Luft gekühlt wiederum in die Einhausung zurückgelangt, so dass innerhalb der Einhausung stets die gleiche Luft umgewälzt wird und diese nicht mit der unter Umständen salzhaltigen Luft im übrigen Turminnern angereichert wird.

4. Windenergieanlage nach einem der vorhergehenden Ansprüche,
**dadurch gekennzeichnet, dass** das Leistungsmodul (7) zweiteilig ausgeführt ist und die beiden Teile des Leistungsmoduls (7) übereinander gestellt werden und das gesamte Leistungsmodul (7) aus zwei übereinander gestellten Trägern (8) besteht, die ihrerseits die wesentlichen Teile der Leistungsmodule (7) aufnehmen, also beispielsweise Transformator, Wechselrichter, Schaltschränke, Mittelspannungsanlage etc.

5. Windenergieanlage nach einem der vorhergehenden Ansprüche,
**dadurch gekennzeichnet dass** die übereinander gestellten Träger (8) nach Art eines Rahmens aufgebaut sind und exakt übereinander passen, so dass eine zuverlässige Befestigung gegeneinander gewährleistet ist.

6. Windenergieanlage nach einem der vorhergehenden Ansprüche,
**dadurch gekennzeichnet dass** die Windenergieanlage über einen Zugang zur Windenergieanlage verfügt, welcher derart positioniert ist, dass er in den Bereich oberhalb der Hoch- oder Mittelspannung führenden Teile des Leistungsmoduls (7) mündet.

7. Windenergieanlage nach einem der vorhergehenden Ansprüche,
**dadurch gekennzeichnet, dass** im Bereich des Zugangs des Turms (9) eine Zwischenplattform vorgesehen ist, die das Personal, welches den Turm (9) betritt, begehen kann, um im Inneren des Turms (9) weiter in der Windenergieanlage hoch zu steigen oder an verschiedenen Steuereinrichtungen Einstellungen vorzunehmen oder auch Messdaten abzulesen und dass bevorzugt die Zwischenplattform mit einer schließbaren Platte versehen ist, durch die das Personal in den unteren Bereich des Leistungsmoduls (7) einsteigen kann.

8. Windenergieanlage nach einem der vorhergehenden Ansprüche,
**dadurch gekennzeichnet, dass** innerhalb des Behälters ein zusätzlicher Raum vorgesehen ist, der z.B. als Umkleideraum und/oder Aufenthaltsraum für Menschen wie Servicetechniker usw. zur Verfügung steht und bevorzugt dieser Raum auch mit den notwendigsten Utensilien versorgt ist, die einen längeren Aufenthalt ermöglichen, wie z.B. Frischwasser, Nahrung, Kommunikationsgeräte.

9. Windenergieanlage nach Anspruch 8
**dadurch gekennzeichnet, dass** der zusätzliche Raum eine Schleusenfunktion aufweist und gegen das Innere der Windenergieanlage hermetisch abschließbar ist.

10. Windenergieanlage nach einem der vorhergehenden Ansprüche,
**dadurch gekennzeichnet, dass** zur Kühlung der Leistungsmodulelemente der Behälter bzw. die Einhausung so ausgestattet ist, dass ein Luftaustausch zwischen dem Inneren des Leistungsmoduls (7) und dem Turminneren der Windenergieanlage möglich ist und bevorzugt eine Wärmeabgabe der Abwärme des Leistungsmoduls (7) an das Turminnere jedoch außerhalb des Leistungsmoduls (7) erfolgt, wozu ein geschlossener Luftkreislauf für das Leistungsmodul (7) vorgesehen ist, der die Wärme über geeignete Wärmetauscher, z.B. eine Kühlschlange, an das Turminnere abgibt oder in das Luft aus dem Inneren der Einhausung über Luftkanäle (12) bzw. Luftschächte, die einerseits in die Einhausung münden, geführt wird und diese Luftschächte an anderer Stelle wiederum die gekühlte Luft in die Einhausung zurückführen und dass Ventilatoren (11) am Eingang und/oder Ausgang der einzelnen Luftschächte eine Zwangskonvektion der Luft innerhalb der Einhausung einstellen.

11. Windenergieanlage nach Anspruch 10 **dadurch gekennzeichnet, dass** die Luftkanäle (12) bzw. Luftschächte direkt am Turm (9) der Windenergieanlage in Kontakt zu diesem geführt werden, beispielsweise auch in mehreren Lagen übereinander spiralförmig, so dass die Luft innerhalb der Luftkanäle (12) gekühlt wird.

12. Windenergieanlage nach einem der vorhergehenden Ansprüche,
**dadurch gekennzeichnet, dass** innerhalb der geschlossenen Einhausung eine Brandschutzeinrichtung untergebracht ist, welche aktiviert wird, wenn dort ein Brand ausbricht und die Brandschutzeinrichtung darin besteht, dass die gesamte Brandschutzeinrichtung mit einem Inertgas geflutet wird, z,B. CO₂, so dass der Sauerstoffgehalt innerhalb der Einhausung verringert wird und somit einem eventuellen Brand der notwendige Sauerstoff entzogen wird und dass das Inertgas in einem Tank aufbewahrt wird.

13. Windenergieanlage nach einem der vorhergehenden Ansprüche,
**dadurch gekennzeichnet, dass** innerhalb der Einhausung Mittel vorgesehen sind, um die dort vorhandene Luft zu entsalzen.

14. Windenergieanlage nach einem der vorhergehenden Ansprüche,
**dadurch gekennzeichnet, dass** die Einhausung mit einer Schleuse versehen ist, welche bevorzugt aus einem glasfaserverstärkten Kunststoff (GFK) hergestellt ist und dass dann, wenn Bedienungspersonal über die Schleuse in die Einhausung eintreten möchte, Luft in die Schleuse gedrückt wird, so dass das Bedienungspersonal gegen einen Luftstrom in die Einhausung gehen kann.

15. Windenergieanlage nach einem der vorhergehenden Ansprüche,
**dadurch gekennzeichnet, dass** die Windenergieanlage eine Offshore-Windenergieanlage ist.

## Claims

1. Wind turbine having a tower (9) which rests on a foundation, and having a power module (7), wherein the power module (7) has at least one transformer and/or converter, by means of which the electrical energy which is provided by the generator of the wind turbine is converted to a medium voltage or high voltage, wherein the power module (7) further contains other units by means of which the electrical energy which is provided by the generator of the wind turbine is controlled and/or directed and/or converted, wherein the power module (7) has a carrier (8) which is placed on the foundation of the wind turbine,
**characterised in that** the power module (7) is arranged in a container which houses the power module inside the tower, wherein the container has a wall (10) which is located between the wall of the tower (9) and the power module (7).

2. Wind turbine according to claim 1,
**characterised in that** the wind turbine is provided with an accessible airlock.

3. Wind turbine according to either of the preceding claims,
**characterised in that** the container forms a housing for the electrical sensitive components of the wind turbine, such as, for example, switching installations, converters, transformers, etc., and **in that** in order to cool the electrical components inside the housing there is provided a cooling system which is formed by means of corresponding cooling channels (12) which lead into the inner side of the tower and, for example, also lead along the tower wall, wherein air is introduced into the cooling channels (12) via a fan (11) and the air returns to the housing again in a cooled state so that inside the housing the same air is always circulated and it is not enriched with the air which may contain salt under some circumstances in the remaining tower interior.

4. Wind turbine according to any one of the preceding claims,
**characterised in that** the power module (7) is constructed in two portions and both portions of the power module (7) are placed one above the other and the entire power module (7) comprises two carriers (8) which are placed one above the other and which themselves receive the significant components of the power modules (7), that is to say, for example, transformers, converters, switch cabinets, medium-voltage installation, etcetera.

5. Wind turbine according to any one of the preceding claims,
**characterised in that** the carriers (8) which are placed one above the other are constructed in the form of a frame and fit exactly one above the other so that a reliable securing with respect to each other is ensured.

6. Wind turbine according to any one of the preceding claims,
**characterised in that** the wind turbine has an access to the wind turbine which is positioned in such a manner that it opens in the region above the high or medium-voltage-carrying components of the power module (7).

7. Wind turbine according to any one of the preceding claims,
**characterised in that**, in the region of the access to the tower (9), there is provided an intermediate platform which the operators entering the tower (9) can access in order inside the tower (9) to climb further in the wind turbine or to carry out adjustments on different control devices or also to read measurement data, and **in that** preferably the intermediate platform is provided with a closable plate through which the operators can climb into the lower region of the power module (7).

8. Wind turbine according to any one of the preceding claims,
**characterised in that** inside the container there is provided an additional space which is available, for example, as a changing room and/or rest room for persons such as service technicians, etcetera, and preferably this space is also provided with the most necessary pieces of equipment which enable a longer stay, such as, for example, fresh water, food, communication devices.

9. Wind turbine according to claim 8,
**characterised in that** the additional space has an airlock function and can be hermetically closed with respect to the inner side of the wind turbine.

10. Wind turbine according to any one of the preceding claims,
**characterised in that**, in order to cool the power module elements, the container or the housing is configured in such a manner that an air exchange between the inner side of the power module (7) and the inner side of the tower of the wind turbine is possible but preferably a heat discharge of the waste heat of the power module (7) to the inner side of the tower takes place outside the power module (7), for which purpose there is provided a closed air circuit for the power module (7) which discharges the heat via suitable heat exchangers, for example, a cooling coil, to the inner side of the tower or is guided into the air from the inner side of the housing via air channels (12) or air shafts which open, on the one hand, in the housing, and these air shafts at another location return the cooled air to the housing again, and **in that** fans (11) at the input and/or output of the individual air shafts adjust a forced convection of the air inside the housing.

11. Wind turbine according to claim 10,
**characterised in that** the air channels (12) or air shafts are guided directly on the tower (9) of the wind turbine in contact therewith, for example, also in several layers one above the other in a helical manner so that the air is cooled within the air channels (12).

12. Wind turbine according to any one of the preceding claims,
**characterised in that** there is accommodated inside the closed housing a fire prevention device which is activated when a fire breaks out at that location and the fire protection device involves the entire fire prevention device being flooded with an inert gas, for example, CO₂, so that the oxygen content inside the housing is reduced and consequently the necessary oxygen is removed from any fire, and **in that** the inert gas is stored in a tank.

13. Wind turbine according to any one of the preceding claims,
**characterised in that** inside the housing means are provided to remove salt from the air provided at that location.

14. Wind turbine according to any one of the preceding claims,
**characterised in that** the housing is provided with an airlock which is preferably produced from a glass-fibre-reinforced plastics material (GFRP) and **in that**, when operators wish to enter the housing via the airlock, air is urged into the airlock so that the operators can proceed counter to an air flow into the housing.

15. Wind turbine according to any one of the preceding claims,
**characterised in that** the wind turbine is an offshore wind turbine.

## Revendications

1. Eolienne avec une tour (9) qui repose sur un socle et un module de puissance (7), dans laquelle le module de puissance (7) présente au moins un transformateur et/ou onduleur au moyen duquel l'énergie électrique mise à la disposition de l'éolienne par le générateur est transformée en une tension moyenne ou haute tension, dans laquelle le module de puissance (7) contient en outre des unités supplémentaires au moyen desquelles l'énergie électrique qui est fournie à l'éolienne par le générateur est commandée et/ou conduite et/ou transformée, dans laquelle le module de puissance (7) présente un support (8) qui est posé sur le socle de l'éolienne,
**caractérisée en ce que** le module de puissance (7) est disposé dans un récipient accueillant le module de puissance à l'intérieur de la tour, dans laquelle le récipient présente une paroi (10) située entre la paroi de la tour (9) et le module de puissance (7).

2. Eolienne selon la revendication 1,
**caractérisée en ce que** l'éolienne est équipée d'un sas praticable.

3. Eolienne selon l'une des revendications précédentes,
**caractérisée en ce que** le récipient forme un boîtier pour les pièces sensibles électriques de l'éolienne, comme par ex. les systèmes de commutation, l'onduleur, le transformateur, etc. et **en ce qu'**un refroidissement pour le refroidissement des pièces électriques à l'intérieur du boîtier est prévu, qui est formé par des conduits de refroidissement (12) correspondants qui mènent à l'intérieur de la tour et mènent par exemple également le long de la paroi de la tour, dans laquelle de l'air est introduit dans les conduits de refroidissement (12) via un ventilateur (11) et dans laquelle l'air refroidi est réinjecté dans le boîtier, de sorte que toujours le même air circule à l'intérieur du boîtier et que celui-ci n'est pas enrichi par de l'air le cas échéant salin présent dans le reste de l'intérieur de la tour.

4. Eolienne selon l'une des revendications précédentes,
**caractérisée en ce que** le module de puissance (7) est réalisé en deux parties et les deux parties du module de puissance (7) sont placées l'une sur l'autre et le module de puissance (7) entier se compose de deux supports (8) placés l'un sur l'autre, qui accueillent de leur côté les pièces importantes des modules de puissance (7), par exemple le transformateur, l'onduleur, les armoires électriques, l'installation à moyenne tension, etc.

5. Eolienne selon l'une des revendications précédentes,
**caractérisée en ce que** les supports (8) superposés sont construits à la manière d'un cadre et s'ajustent exactement l'un sur l'autre de telle sorte qu'une fixation fiable l'un contre l'autre est garantie.

6. Eolienne selon l'une des revendications précédentes,
**caractérisée en ce que** l'éolienne dispose d'un accès à l'éolienne qui est positionné de telle sorte qu'il débouche dans la zone au-dessus des pièces du module de puissance (7) conductrices de haute ou moyenne tension.

7. Eolienne selon l'une des revendications précédentes,
**caractérisée en ce que**, dans la zone de l'accès de la tour (9), une plate-forme intermédiaire est prévue qui peut être utilisée par le personnel qui entre dans la tour (9) pour monter plus haut dans l'éolienne à l'intérieur de la tour (9) ou pour effectuer des réglages sur différents dispositifs de commande ou également pour relever des données de mesure et **en ce que** la plate-forme intermédiaire est munie de préférence d'une plaque pouvant être fermée, par laquelle le personnel peut pénétrer dans la zone inférieure du module de puissance (7).

8. Eolienne selon l'une des revendications précédentes,
**caractérisée en ce qu'**un espace supplémentaire est prévu à l'intérieur du récipient, qui est par exemple à la disposition des personnes telles que les techniciens de service, etc., comme vestiaire et/ou salle de séjour et cet espace est de préférence également pourvu des affaires indispensables pour permettre un séjour de longue durée, telles que par exemple de l'eau douce, de la nourriture, des appareils de communication.

9. Eolienne selon la revendication 8,
**caractérisée en ce que** l'espace supplémentaire présente une fonction de sas et peut être fermé hermétiquement par rapport à l'intérieur de l'éolienne.

10. Eolienne selon l'une des revendications précédentes,
**caractérisée en ce que**, pour le refroidissement des éléments du module de puissance, le récipient ou le boîtier est équipé de telle sorte qu'un échange d'air est possible entre l'intérieur du module de puissance (7) et l'intérieur de la tour de l'éolienne et de préférence une dissipation de la chaleur perdue du module de puissance (7) a lieu au niveau de l'intérieur de la tour, mais cependant à l'extérieur du module de puissance (7), dans laquelle un circuit d'air fermé est prévu à cet effet pour le module de puissance (7), qui dissipe la chaleur au niveau de l'intérieur de la tour via des échangeurs thermiques appropriés, par exemple un serpentin de refroidissement, ou dans lequel de l'air est guidé hors de l'intérieur du boîtier par des conduits d'air (12) ou des puits d'aération qui d'un côté, débouchent dans le boîtier, et ces puits d'aération à un autre endroit ramènent l'air refroidi dans le boîtier, et **en ce que** des ventilateurs (11) au niveau de l'entrée et/ou de la sortie des différents puits d'aération règlent une convection forcée de l'air à l'intérieur du boîtier.

11. Eolienne selon la revendication 10, **caractérisée en ce que** les conduits d'air (12) ou les puits d'aération sont amenés directement au niveau de la tour (9) de l'éolienne en contact avec celle-ci, par exemple également les uns sur les autres en forme de spirale en plusieurs couches, de telle sorte que l'air est refroidi à l'intérieur des conduits d'air (12).

12. Eolienne selon l'une des revendications précédentes,
**caractérisée en ce qu'**un dispositif de protection incendie est logé à l'intérieur du boîtier fermé, qui est activé dans le cas où un incendie s'y déclare, et le dispositif de protection incendie consiste **en ce que** l'ensemble du dispositif de protection incendie est inondé d'un gaz inerte, par exemple du CO₂, de telle sorte que la teneur en oxygène à l'intérieur du boîtier est réduite et qu'un éventuel incendie ne puisse être alimenté par l'oxygène nécessaire, et **en ce que** le gaz inerte est conservé dans un réservoir.

13. Eolienne selon l'une des revendications précédentes,
**caractérisée en ce que** des moyens sont prévus à l'intérieur du boîtier pour dessaler l'air qui y est contenu.

14. Eolienne selon l'une des revendications précédentes,
**caractérisée en ce que** le boîtier est pourvu d'un sas qui est réalisé de préférence en un plastique renforcé à la fibre de verre (GFK) et **en ce que**, lorsque du personnel exploitant souhaite entrer dans le boîtier via le sas, l'air présent dans le sas est alors comprimé de sorte que le personnel exploitant puisse pénétrer dans le boîtier contre un flux d'air.

15. Eolienne selon l'une des revendications précédentes,
**caractérisée en ce que** l'éolienne est une éolienne offshore.
